# DEMANDE DE BREVET EUROPEEN

(11) **EP 4 752 163 A1**
(43) Date de publication de la demande: **03.06.2026**
(21) Numéro de dépôt: 25205751.8
(22) Date de dépôt: 30.09.2025
(51) Int. Cl.: C08F 220/14

(54) **COMPOSITIONS DE COPOLYMERES ACIDES ET ANHYDRIDES**

(30) Priorité: 28.11.2024 FR 2413117
(71) Demandeur: ARKEMA France, 92800 Puteaux (FR)
(72) Inventeur: BROCAS, Anne-Laure, 64170 LACQ (FR); MERCERON, Amélie, 64170 LACQ (FR); BONNAVENTURE, Marc, 64170 LACQ (FR); BONNEVILLE, Pierre-Etienne, 64301 ORTHEZ CEDEX (FR)

(57) **Abrégé**

La présente invention concerne des compositions comprenant des copolymères acryliques et méthacryliques, ces copolymères comprenant du méthacrylate de méthyle, de l'acide méthacrylique et de l'acide acrylique avec des proportions massiques méthacrylate de méthyle / acide (meth) acrylique voisines de 50 /50 et dont une partie des fonctions acides peuvent être anhydrisées. La présente invention concerne également les procédés pour obtenir ces copolymères ainsi que l'utilisation de ces copolymères.

## Description

La présente invention concerne des compositions comprenant des copolymères acryliques et méthacryliques, ces copolymères comprenant du méthacrylate de méthyle, de l'acide méthacrylique et de l'acide acrylique avec des proportions massiques méthacrylate de méthyle / acide (meth) acrylique voisines de 50 /50 et dont une partie des fonctions acides peuvent être anhydrisées. La présente invention concerne également les procédés pour obtenir ces copolymères ainsi que l'utilisation de ces copolymères.

Les compositions comprenant du méthacrylate de méthyle (MMA) et de l'acide méthacryliques (MAA) ou de l'acide acrylique (AA) sont bien connues de l'art antérieur, en particulier les compositions comprenant une majorité de MMA. Ces compositions sont parfois anhydrisées.

On peut trouver dans l'art antérieur de nombreuses références faisant état de ces compositions :

GB 478323 en 1936 divulgue des compositions copolymériques d'esters méthacryliques ou mélanges d'ester méthacryliques avec de faibles proportions d'acide acryliques et ou méthacryliques. Ces copolymères sont présentés comme aidant à la formulation de pigments.

GB 698193 en 1950 divulgue des compositions copolymériques d'ester méthacryliques et de monomères parmi lesquels l'acide méthacrylique. Ces copolymères sont décrits comme présentant une résistance à la température améliorée.

GB 1437176 en 1972 divulgue des copolymères thermoplastiques convenant pour le moulage ou l'extrusion qui comprend 50 à 99% d'unités dérivant d'un monomère principal à non-saturation éthylénique qui est principalement un méthacrylate d'alkyle ou du styrène et 50 à 1% d'un mélange d'unités anhydride d'acide et acide carboxylique à non-saturation éthylénique provenant d'un acide acrylique substitué en alpha, étant entendu qu'au moins
5% et de préférence au moins 10% des unités ce mélange sont des unités anhydride.

EP 0076691 en 1982 revendique des copolymères présentant des entités d'anhydride glutarique produits par anhydrisation de copolymères comprenant entre autres du méthacrylate de méthyle et des comonomères tels que l'acide acrylique ou l'acide méthacrylique. Ces copolymères sont ensuite anhydrisés puis imidisés avec pour objectif d'en augmenter la stabilité thermique.

Poursuivant le même problème technique, EP0264508 en 1985 divulgue des compositions copolymériques comprenant un monomère vinylique, de l'acide acrylique et de l'acide méthacrylique, les monomères acides pouvant représenter jusqu'à 50 % de la composition des copolymères même si seules des compositions à très forte proportion de méthacrylate de méthyle sont exemplifiées.

EP 0774471 en 1995 divulgue un procédé suspension mettant en œuvre des compositions de méthacrylate de méthyle et d'acide méthacrylique avec des proportions massiques d'acide méthacrylique pouvant aller jusqu'à 40 % montrant également l'intérêt de ces compositions dans l'amélioration des propriétés en température de ces compositions copolymériques.

EP 1496067 en 2002 revendique des compositions copolymériques comprenant des entités glutariques obtenues par anhydrisation de copolymères comprenant entre autres du méthacrylate de méthyle et de l'acide méthacrylique et ce pour améliorer la résistance en température de ces copolymères, mais aussi la résistance aux agent chimique ainsi que la résistance à la rayure. Ces compositions présentent une majorité de méthacrylate de méthyle au sein de leur composition.

Plus récemment EP 2447292 en 2010 divulgue des compositions copolymériques solubles en milieu aqueux ou une majorité de monomères acide est présente. Des compositions à forte teneur en acide acrylique sont exemplifiées, typiquement 80 %, avec un autre comonomère d'ester méthacrylique.

Enfin dans EP 3330302 en 2015 sont divulguées des compositions présentant des structures cyclisées et de monomères d'ester méthacryliques en quantité majoritaire et d'autres monomères à motifs vinyliques. Ces compositions présentent de bonne propriétés optiques, thermiques et de résistance mécanique.

Dans tous les cas, la présence d'acide méthacrylique ou acrylique permet une amélioration de certaines propriétés telle que la température de transition vitreuse, la résistance à la rayure et la conservation de certaines propriétés mécaniques à températures plus élevées comparativement aux polymères contenant uniquement du méthacrylate de méthyle mais également leur solubilité dans des solutions aqueuses pour les teneurs à proportions majoritaires en acide (meth) acrylique.

La présence d'entités acides au sein de la chaine macromoléculaire se traduit parfois de façon souhaitée ou de façon subie par une cyclisation d'une partie des entités acides lorsqu'elles sont adjacentes, ou non, en entités anhydrides glutariques, ce qui se traduit par un renforcement des propriétés précitées. Ainsi, outre les fonctions du méthacrylate de méthyle et de l'acide méthacryliques ce type de copolymères peut présenter des fonctions anhydrides glutariques. Selon les conditions, les groupes acides du copolymère initial ont tendance à cycliser par réaction soit avec un groupe acide voisin (départ d'eau), soit avec un groupe ester méthylique voisin (départ de méthanol).

Dans la majorité des compositions décrites dans l'art antérieur, les quantités d'acide méthacrylique présentes sont inférieures à 20 % en poids, rapprochant ces compositions du PMMA sur le plan des propriétés et des applications mais on trouve aussi des compositions à proportions majoritaires d'entités monomériques acides qui sont solubles en milieu aqueux.

Les compositions présentant des teneurs en méthacrylate de méthyle et d'entités acides autours de 50 % en masse de monomères sont en revanche beaucoup moins décrites.

Ces compositions, anhydrisées ou non peuvent être intéressantes telles quelles ou dans des formulations de mélange avec d'autres polymères. Elles se distinguent des compositions à faibles teneurs en acide par des propriétés éloignées du PMMA et ont des solubilités dans les solutions aqueuses pouvant être intéressantes dans les domaines de l'emballage la diffusion retardée et/ou contrôlée de principe actifs dans des environnements humides.

Elles peuvent aussi améliorer les propriétés thermomécaniques de formulations polymériques sacrificielles en impression 3D tout en conservant une solubilité de la formulation sacrificielle en milieu aqueux. En effet dans les procédés d'impression 3D par dépôt de filament en fusion, il est parfois nécessaire de supporter le polymère à imprimer par une formulation qui évite l'effondrement de la structure au cours du processus d'impression 3D. Une fois la pièce achevée, on procède à l'élimination de la composition sacrificielle par dissolution dans un solvant, généralement une solution aqueuse. Les procédés d'impression 3D sont de plus en plus demandés pour obtenir des objets complexes. Cela permet d'éviter la fabrication de moules difficiles à réaliser. Lorsque des pièces en petites série doivent être préparées, ces procédés ont une empreinte carbone bien plus faible que les procédés classiques tels que le moulage ou l'injection. En particulier, ce sont des procédés ou il existe peu de chute de matière.

Les supports sacrificiels solubles en milieu aqueux peuvent présenter certaines propriétés insuffisantes pour être utilisées en tant que support. Il est parfois nécessaire de combiner plusieurs matériaux solubles ou dispersibles pour remplir les conditions de rhéologie, de tenue en température, de bonne solidification. Ainsi, les compositions de l'invention permettent de palier à ces insuffisances, en tout ou partie pour des propriétés telles que mécanique, rhéologiques, température de transition vitreuse, solubilité en milieu aqueux).

Ces compositions à fortes teneurs en acide méthacrylique lorsqu'elles sont anhydrisées en tout ou partie présentent en revanche une forte viscosité à la fusion ce qui les rend difficiles à extruder ou à mouler. Lors de l'extrusion de telles compositions, les débits restent limités et de nombreux point noirs issus de dégradations se retrouvent dans la matière obtenue. Par ailleurs, leur viscosité limite la fenêtre de rhéologie adéquate pour être utile dans les procédés d'impression 3D utilisant ces matériaux sacrificiels

La demanderesse a ainsi découvert que le remplacement d'une faible partie de l'acide méthacrylique par de l'acide acrylique (AA) permet de nettement améliorer la fluidité des copolymères sans préjudice pour les autres propriétés recherchées avec ces copolymères à fortes teneurs en monomère acides, typiquement voisines de 50 / 50 MMA/MAA.

En outre le procédé utilisé permet d'ajuster la présence de cycles glutarique par la suite d'anhydrisation dans des proportions pouvant aller jusqu'à 40 % en masse d'entités anhydride car la fluidité du copolymère se traduit par une meilleure qualité en terme de pollutions externes issues des outils de transformation, ainsi que de meilleurs débits des machines.

Il en résulte des compositions dont la température de transition vitreuse et d'autres propriétés peuvent être ajustées.

On peut par conséquent obtenir des copolymères à forts taux d'anhydrisation sans être pénalisé par les viscosités engendrées sur les copolymères ou seul le MMA et l'AMA sont présents.

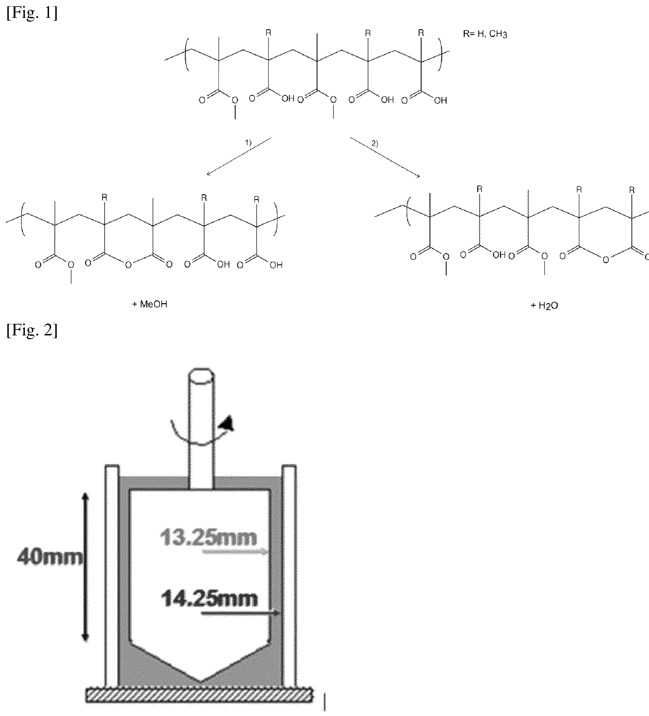

On rappelle en [Fig.1] le schéma global conduisant à l'anhydrisation de ces composés.

### Résumé de l'invention.

L'invention concerne une composition comprenant un copolymère statistique comprenant les monomères suivants :
- Méthacrylate de méthyle de 50 à 60 % massique, bornes comprises,
- Acide méthacrylique de 40 à 50 % massique, bornes comprises,
- Acide acrylique de 2 à 8% massique, bornes comprises,
et dont une partie des fonctions acide acrylique et acide méthacrylique est anhydrisées dans une proportion comprise entre 0 et 40 % en masse d'entités anhydride.

### Description des modes de réalisation

Les compositions de l'invention sont exprimées en masse des monomères méthacrylate de méthyle, acide méthacrylique et acide acrylique. La proportion d'anhydride est mesurée par RMN du proton et intégrant dans le calcul les masses molaires respectives des monomères, l'entité anhydride étant considéré de masse moléculaire de 154g.

Les compositions comprenant les copolymères de l'invention comprennent du méthacrylate de méthyle dont tout ou partie peut être du méthacrylate de méthyle recyclé, c'est-à-dire issu d'un processus de recyclage par dépolymérisation de PMMA et de ses copolymères, suivi d'une étape de purification visant à obtenir une teneur en méthacrylate de méthyle supérieure à 99%.

En outre, les compositions comprenant les copolymères de l'invention comprennent du méthacrylate de méthyle dont tout ou partie peut être issu d'une ressource renouvelable biosourcée c'est-à-dire présentant un rapport ¹⁴C/¹²C compris entre 0,9 et 1,3 10⁻¹².

Les compositions comprenant les copolymères de l'invention comprennent de l'acide méthacrylique dont tout ou partie peut être issu d'une ressource renouvelable biosourcée c'est-à-dire présentant un rapport ¹⁴C/¹²C compris entre 0,9 et 1,3 10⁻¹².

Les compositions comprenant les copolymères de l'invention comprennent de l'acide acrylique dont tout ou partie peut être issu d'une ressource renouvelable biosourcée c'est-à-dire présentant un rapport ¹⁴C/¹²C compris entre 0,9 et 1,3 10⁻¹².

Ainsi les copolymères des compositions de l'invention peuvent présenter un rapport ¹⁴C/¹²C pouvant aller de 0 à 1,3 10⁻¹², et de préférence compris entre 0,5 à 1,3 10⁻¹², et de façon préférée compris entre 0,8 et à 1,3 10⁻¹².

La mesure de ce rapport peut être effectuée par les techniques classiques de mesures de datation au carbone 14 et en particulier l'ASTM D6866-24. Le rapport ¹⁴C/¹²C avec la valeur de 1,3 10⁻¹² correspond au rapport mesuré sur les organismes vivants. On considère que compte tenu de la durée de demi-vie de 5730 ans du carbone 14 ce rapport reste dans cet ordre de grandeur pendant de nombreuses années en raison de la précision de la mesure.

Les copolymères des compositions de l'invention peuvent présenter un taux d'anhydrification sous la forme de cycle glutariques compris entre 0 et 40 % en masse d'entités anhydride.

Les copolymères présents dans les compositions de l'invention peuvent être obtenus par les procédés connus de l'homme du métier parmi lesquels on peut citer les procédés masse, solvant, émulsion, suspension. De préférence il s'agit des procédés suspension ou en phase solvant et de préférence les procédés en suspension et en phase solvant tel que l'éthanol, le toluène, la méthyl éthyle cétone, seuls ou en mélange et de préférence un mélange éthanol-toluène ou éthanol- méthyl éthyle cétone.

Les synthèses sont opérées de façon radicalaires ou radicalaires contrôlées.

Lorsqu'il est nécessaire d'obtenir les copolymères des compositions de l'invention avec des taux de cyclisation par anhydrification déterminés, les copolymères issus de la synthèse subissent une seconde étape de transformation par l'utilisation d'outil de compoundage parmi lesquels on peut citer les extrudeuse mono et bi-vis, les malaxeurs continus, les réacteurs malaxeurs, les atomiseurs.

De préférence on utilise une extrudeuse bi-vis munie d'un dispositif de dégazage permettant l'élimination des effluents (solvant résiduel, eau et méthanol) ou un réacteur malaxeur muni d'un dispositif de dégazage permettant l'élimination des effluents (solvant résiduel, eau et méthanol). De façon encore préférée on utilise un réacteur malaxeur.

Ainsi par exemple, un copolymère obtenu par voie solvant pourra être traité dans un réacteur malaxeur à température et vide contrôlé avec débit permettant d'ajuster le temps de séjour pour opérer la séparation du solvant et effectuer la transformation d'anhydrification d'une partie des fonction acides issue des monomères acryliques copolymérisés. Le produit issu du réacteur malaxeur est récupéré par une étape d'extrusion granulation

De la même manière, un copolymère obtenu par la voie suspension sera séparé de la phase aqueuse par filtration puis traité dans une extrudeuse pour y effectuer la transformation d'anhydrification d'une partie des fonctions acides issue des monomères (meth)acryliques copolymérisés.

Ainsi on peut obtenir des copolymères présentant un taux d'anhydrisation -variant de 0 à 40 % en masse d'entités anhydride de préférence entre 10 et 40 %, de façon préférée entre 20 et 35 % et de façon encore préférée entre 25 et 35 %.

A partir de compositions monomériques comprenant les monomères MMA, MAA, AA, on peut obtenir toute une famille de copolymères comprenant ces monomères polymérisés, mais également un taux ajustable de fonctions anhydride glutarique par la suite du processus d'anhydrification et de cyclisation selon les conditions opérées dans la seconde étape de transformation. Cela permet d'obtenir des produits à propriétés variées selon les conditions de synthèse de cette deuxième étape à partir de composition comprenant les mêmes monomères MMA/MAA/AA.

S'agissant des proportions monomérique MMA/MAA/AA des copolymères présents dans les compositions de l'invention elles feront partie des ensembles suivants :
- Méthacrylate de méthyle (MMA) de 50 à 60 % massique, de préférence de 52 à 58 % massique, et de préférence entre 53 et 57 % massique bornes comprises.
- Acide méthacrylique de 40 à 50 % massique, de préférence de 40 à 46 % massique bornes comprises,
- Acide acrylique de 2 à 8 % massique, et de préférence de 3 à 7 % massique, et de façon préférée de 4 à 6 % massique, bornes comprises.

L'anhydrisation des copolymères des compositions de l'invention s'effectue dans une étape postérieure à la synthèse des copolymères. Cette étape peut avantageusement être effectuée directement en suivant la synthèse dans un outil tel qu'une extrudeuse mono et bi-vis, un malaxeur continu, un réacteur malaxeur, ou un atomiseur.

La synthèse des copolymères des compositions de l'invention peut être effectuée en présence d'un limitateur de chaine tel qu'un mercaptan, en particulier un alkyl mercaptan dont la chaîne alkyle ramifiée ou non présente entre 4 et 8 atomes de carbone.

Les copolymères des compositions de l'invention présentent une masse moléculaire en poids entre 50000 et 200000 g/mole, de préférence entre 50000 et 150000 g/ mole, de façon préférée entre 60000 et 120000 g/mole, et de façon encore préférée entre 60000 et 95000, mesuré chromatographie d'exclusion stérique avec étalons de polystyrène.

La dispersité des copolymères des compositions de l'invention est comprise entre 1,2 et 3 et de préférence entre 1,2 et 2.

Les viscosités des copolymères des compositions de l'invention à 30 % massique dans un mélange de solvants 68 % massique d'éthanol et de 32 % massique de toluène sont comprises entre 8000 à 25000 et de préférence 10000 à 20000 mPa.s.

Les copolymères des compositions de l'invention peuvent être utilisés dans des compositions de polymères sacrificiels en impression 3D par dépôt de filament en fusion, comme promoteur d'adhésion, comme additif de formulation pour améliorer les propriétés thermomécaniques des formulations polymériques, capsules de principes actifs solubles en milieu aqueux, pour ne citer que les principales.

### Exemple 1 :

Dans cette série d'exemples les essais ont été conduits dans des proportions en monomères de 55% massique MMA et 45 % massique d'acide (méth)acrylique ou 45 % massique est la somme acide méthacrylique et acide acrylique. Ces proportions sont celles de la charge du réacteur.

Cette série d'exemple est effectuée en procédé solvant.

Les réactifs sont les suivants :
- Amorceur : Luperox 575 (tert-amyl peroxy-2-ethylhexanoate, provenance Arkema).
- Acide méthacrylique (AMA) (provenance Aldrich).
- Acide acrylique (AA) (provenance Aldrich).
- Méthacrylate de méthyle (MMA) (provenance Aldrich).
- Ethanol (provenance Aldrich).
- Toluène (provenance Aldrich).

Les synthèses sont effectuées dans un réacteur de 4 litres sous agitation dans un réacteur inox fermé sous atmosphère d'azote durant 210 minutes avec les quantités de réactifs du tableau 1.

**[Tableaux1]**

| Tableau 1 | référence | essai 1 (3% AA) | essai 2 (5 % AA) |
|---|---|---|---|
| Luperox 575E (g) | 5 | 5 | 5 |
| Méthacrylate de méthyle (g) | 661 | 661 | 661 |
| Acide méthacrylique (g) | 541 | 505 | 481 |
| Acide acrylique (g) | 0 | 36 | 60 |
| Ethanol (g) | 1165 | 1165 | 1165 |
| Toluène (g) | 548 | 548 | 548 |
| Température réacteur °C | 105 | 105 | 105 |

Les conversions finales sont de 95 %.

Le mélange final est transféré dans un réacteur malaxeur (temps de séjour de 30 minutes à 210°C sous vide pour évaporer le solvant et les monomères résiduels. Une mesure du taux d'anhydrisation est effectuée sur ces produits en sortie du réacteur et montre qu'ils sont nuls.

La référence présente une masse moléculaire en poids de 72000 g/mole contre 76000 pour l'essai 1 et 77000 pour l'essai 2. Les mesures sont effectuées par SEC avec étalonnage à l'aide d'échantillons polystyrène.

Les essais de référence, 1 et 2 sont ensuite traités dans un réacteur malaxeur de type LIST puis une extrudeuse bi-vis L/D 45 suivi d'une granulation et le temps de séjour est ajusté par le temps de séjour dans le réacteur malaxeur. Une filtration est apposée dans l'extrudeuse juste avant la filière avec un calibre de 150µm.

On mesure ainsi le taux d'anhydrisation (% Panh) à l'issue d'un temps de séjour de 3 et 15 minutes. (tableau 2) :

La proportion d'anhydride (PAnh) est mesurée par RMN du proton et intégrant dans le calcul les masses molaires respectives des autres monomères, l'entité anhydride étant considéré de masse moléculaire de 154g.

Les teneurs sont calculées à partir des spectres RMN 1H :
- La teneur en acide méthacrylique polymérisé est calculée sur le signal du OH acide vers 12 ppm sur le spectre sans TFA (acide trifluoro acétique).
- La teneur en méthacrylate de méthyle polymérisé est calculée sur le signal des OCH3 ester entre 3.2 et 3.7 ppm sur le spectre + TFA.
- La teneur en acide acrylique polymérisé en négligée.
- La teneur en Panh est calculée sur le spectre 1H par différence dans la zone des protons aliphatiques entre 0.0 et 2.5 ppm sur le spectre en présence de TFA.

**[Tableaux2]**

| Tableau 2 | % Panh 3 minutes | % Panh 15 minutes |
|---|---|---|
| Référence anhydrifiée | 20 | 32 |
| Essai 1 anhydrifié | 21 | 30 |
| Essai 2 anhydrifié | 20 | 30 |

Les mesures de viscosité sont effectuées à 10 et 30% massique de copolymère dans un mélange de solvants ( 68 % massique d'éthanol et de 32 % massique de toluène).

On utilise un rhéomètre à contraintes imposées type MCR301 de chez ANTON PAAR. La norme utilisée est l'ISO 3219-2 :2021.

Les mesures s'effectuent par balayage de contrainte en écoulement à 20°C. La géométrie utilisée est de type couette pour lequel la régulation de température est assurée par l'effet Peltier. La géométrie couette utilisée est donnée en [Fig.1].

La composition à étudier est introduite dans l'entrefer de la géométrie couette à l'aide d'une pipette jetable. La gamme de gradient de cisaillement varie en mode logarithmique de 0.1 à 100 s-1 avec mesure de 10 points par décade.

Les granulés issus de l'extrudeuse sont examinés à l'aide du dispositif PS25C de marque OCS afin de déterminer la quantité de pollutions sous forme de points noirs. Le dispositif effectue une analyse d'image sur 2 litres de granulés. Les granulés sont véhiculés à l'aide d'un tapis vibrant sous une caméra qui inspecte la surface des granulés et capture les images des défauts identifiés.

La taille des défauts est mesurée et le logiciel réparti le nombre de défauts par classe de taille. On reporte en particulier les pollutions dont la taille est supérieure à 600 µm.

Les mesures des essais de référence, 1 et 2 anhydrifiés 15 minutes sont ainsi évalués en viscosité et un comptage des pollutions sous la forme de point noirs évalué (tableau 3).

**[Tableaux3]**

| tableau 3 | viscosité (mPa. 10% massique | viscosité (mPa. 30% massique | pollutions >600 |
|---|---|---|---|
| référence anhydrifiée | 36,7 | 36400 | 116 |
| essai 1 anhydrifié | 26,1 | 19100 | 19 |
| essai 2 anhydrifié | 26 | 15000 | 16 |

On notera que la référence anhydrifiée présente une viscosité bien plus élevée que les essais 1 et 2 anhydrifiés. Ceci s'accompagne lors de l'extrusion de nombreuses pollutions générées par la viscosité excessive de la référence.

## Revendications

1. Composition comprenant un copolymère statistique issu d'une polymérisation comprenant les monomères suivants :
- Méthacrylate de méthyle de 50 à 60 % massique, bornes comprises,
- Acide méthacrylique de 40 à 50% massique, bornes comprises,
- Acide acrylique de 2 à 8 % massique, bornes comprises,
et dont une partie des fonctions acides acrylique et acide méthacrylique est anhydrisées dans une proportion comprise entre 0 et 40 % en masse d'entités anhydride.

2. Composition selon la revendication 1 comprenant du méthacrylate de méthyle dont tout ou partie peut être du méthacrylate de méthyle recyclé.

3. Composition selon la revendication 1 ou 2 comprenant du méthacrylate de méthyle dont tout ou partie peut être issu d'une ressource renouvelable biosourcée c'est-à-dire présentant un rapport ¹⁴C/¹²C compris entre 0,9 et 1,3 10⁻¹² mesuré selon l'ASTM D6866-24.

4. Composition selon la revendication 1 à 3 comprenant de l'acide (méth) acrylique dont tout ou partie peut être issu d'une ressource renouvelable biosourcée c'est-à-dire présentant un rapport ¹⁴C/¹²C compris entre 0,9 et 1,3 10⁻¹² mesuré selon l'ASTM D6866-24.

5. Procédé de synthèse d'une des compositions selon les revendications 1 à 4 **caractérisé par** sa mise en œuvre en suspension ou en phase solvant suivi éventuellement d'une étape de transformation dans une extrudeuse mono ou bi-vis, un malaxeur continu, un réacteur malaxeur.

6. Utilisation des compositions selon l'une des revendication 1 à 4 dans des compositions de polymères sacrificiels en impression 3D par dépôt de filament en fusion, comme promoteur d'adhésion, comme additif de formulation pour améliorer les propriétés thermomécaniques des formulations polymériques et capsules de principes actifs solubles en milieu aqueux.
